# EUROPEAN PATENT APPLICATION

(11) **EP 4 799 533 A1**
(43) Date of publication of application: **02.09.2026**
(21) Application number: 26160364.1
(22) Date of filing: 24.02.2026
(51) Int. Cl.: A47B 47/05, A47B 96/04, F16B 12/26, F16B 12/40, F16B 12/46

(54) **KIT FOR A RECYCLABLE MODULAR FURNITURE ELEMENT**

(30) Priority: 28.02.2025 IT 202500004140
(71) Applicant: Universita' IUAV di Venezia, 30135 Venezia (IT)
(72) Inventor: ROSSETTI, Massimo, 30135 VENEZIA (IT); VESTUTI, Luca, 30135 VENEZIA (IT)
(74) Representative: De Filippis, Sara

(57) **Abstract**

The invention relates to a kit for the construction of a modular furniture element with an interior compartment, comprising a frame (10) provided with a plurality of horizontal and vertical bars (11, 12, 13), a plurality of first panels (20) for the lining of said inner compartment, made of a composite material, one or more second panels (30) mechanically inserted and fixed to said frame (10) for defining said internal compartment, mechanical coupling means (40, 50) configured to couple each of said first panels (20) to a respective second panel (30). The composite material comprises polyester.

## Description

The present invention relates to the field of furniture elements, and more particularly to a kit and a furniture element with an internal compartment, having modular components and mechanical connections.

### Field of the invention

In the furniture sector, particularly regarding kitchen furniture elements, there is a growing focus on solutions that respect the principles of the circular economy and environmental sustainability.

Traditionally, kitchen furniture is made using a variety of materials such as solid wood, wood derivatives, aluminum, steel, glass, marble, and plastics.

### Prior art

Over the years, various techniques have been developed to improve the sustainability of these materials, such as the use of particleboard panels made with recycled wood or veneers, for example, FSC or PEFC certified.

However, despite these efforts, some critical issues remain that hinder the full application of circular economy principles in the kitchen and furniture sector in general.

In particular, many components are made by permanently joining different materials, making their disassembly and recycling at end-of-life difficult if not impossible.

Such joints generally involve adhesives or glues.

Furthermore, kitchens are often custom-made systems with personalized components, which further complicates their disposal and reuse.

Even in products that use materials declared as recyclable, the use of glues for fastening effectively compromises the possibility of recovery and recycling.

A further problem is the difficulty of adapting and reusing kitchens in new environments once they are decommissioned, thus encouraging the purchase of new products.

The relevant prior art also includes patent applications WO97/26808A1, US2010/079042A1, and CN116423951A.

### Scope of the invention

In light of the highlighted problems in the furniture sector, particularly for kitchens, the need arises to develop innovative solutions that fully embrace the principles of the circular economy.

The scope of the present invention is, therefore, to overcome the critical issues of the prior art, solving the technical problem of how to create a modular furniture kit that achieves a synergistic balance between technical requirements and environmental sustainability. Specifically, the invention aims to reconcile: lightness and structural robustness, a high degree of material sustainability, and complete recyclability at end-of-life so that its main components can be easily separated and reintroduced into the production cycle.

The solution to this problem represents a significant step towards a furniture system that fully embraces the principles of the circular economy.

A kit for the creation of furniture elements that overcomes current critical issues represents a significant step towards this goal. Such a kit should allow the creation of furniture characterized by three fundamental attributes: easy disassembly, high reconfigurability, and complete recyclability.

Simplified disassembly would allow for targeted maintenance interventions, extending the useful life of the product. This feature could be further improved through the use of standardized quick connectors, which allow for disassembly without the use of specialized tools.

The possibility of not having to use special tools and the ease of assembly/disassembly are particularly advantageous aspects.

Furthermore, interchangeable modular components could be provided between different furniture elements, increasing the versatility of the system.

Reconfigurability would allow the furniture to be adapted to new spaces or needs, avoiding its premature disposal. This aspect could be enhanced through the implementation of a universal joint system that allows the components to be combined in multiple configurations.

The total recyclability of the components would ensure the recovery of resources at the end of the life cycle, minimizing waste and environmental impact.

Finally, it is a scope of the invention to create a furniture system or a kit for its creation that is formed of recyclable elements without the presence of glues or paints that could affect their disposal and recyclability to the detriment of the circular economy.

These aspects, combined in a single modular system, would represent a substantial innovation in the sector, aligning furniture production with the principles of sustainability and resource circularity.

The kit could be further enriched with a digital application that provides interactive assembly instructions, suggestions for reconfigurability, and information on the correct disposal or recycling of components.

### Object of the invention

Herein and hereinafter, "homogeneous material" shall be understood to mean a composite material wherein one of the fractions is a plastic material, and these expressions will be used as corresponding to the same meaning.

In detail, homogeneous material is understood to mean a material that, although it may be composed of more than one element, is treated as a mono-material.

More specifically, during the following discussion, homogeneous material is understood to mean a material that in recycling and reuse processes is treated and managed as a material composed of a single element.

An example of a homogeneous material can be a composite material in which one of the fractions is a plastic material.

In some cases, the plastic material fraction may be the majority fraction.

In some embodiments, the plastic material fraction may be made with a mono-material.

The value of the plastic material fraction may vary depending on the embodiments and specific needs. In a first embodiment it may be 30%, but for example in a further embodiment it may also be 100%.

It is, therefore, object of the present invention a kit for the construction a furniture element with an interior compartment. Such a kit advantageously comprises a frame provided with a plurality of horizontal bars, transverse bars and/or vertical bars, a plurality of first panels for the lining said inner compartment, made of a composite material, such as a composite material in which one of the fractions is a plastic material, one or more second panels mechanically inserted and fixed to said frame for defining said internal compartment, mechanical coupling means configured to couple each of said first panels to a respective second panel, wherein the homogeneous material comprises at least 30% recycled plastic and the horizontal bars, transverse bars and/or vertical bars are made of aluminum.

The combination of an aluminum frame with panels having recycled plastic is not a mere aggregation of known elements, but produces a synergistic and unexpected technical effect. The high strength and lightness of aluminum provide the ideal structural support for the use of composite panels with at least 30% recycled plastic, without compromising the stability and durability of the entire furniture element.

Vice versa, the use of such sustainable panels, made possible by the robustness of the frame, allows for achieving a circularity objective that would not be attainable with traditional panels.

The invention thus solves the technical prejudice that led to having to choose between structural lightness and material sustainability, advantageously achieving both.

This kit allows for the creation of modular and completely disassemblable furniture elements, facilitating the reuse and recycling of components at the end of the product's life cycle, in line with the principles of the circular economy.

Preferably, the homogeneous material may comprise polyester.

The use of a significant percentage of recycled material helps to reduce the environmental impact of the product, promoting the reuse of existing resources.

Appropriately, the homogeneous material can be completely recyclable.

The complete recyclability of the homogeneous material further facilitates the recovery and reuse of resources at the end of the product's life cycle, minimizing waste.

In a preferred embodiment, the bars can be made of aluminum.

The use of aluminum bars ensures lightness and strength to the structure, in addition to being an easily recyclable material.

Suitably, the bars of said frame can be connected to each other by means of concealed joints and mechanical fastening means.

This connection system allows for simple and rapid assembly and disassembly, without compromising the stability of the structure and integrating elements that are difficult to remove.

In preferred embodiments, the mechanical coupling means can comprise a first male element and a second female element.

This coupling system allows for an intuitive and secure assembly of the panels, facilitating any replacement or maintenance operations.

Preferably, the first element can be fixed to one of the second panels and the second element can be fixed to a respective first panel or vice versa.

This configuration offers flexibility in assembly and allows to optimize the arrangement of components based on specific needs.

Depending on the different embodiments, the mechanical coupling means can be pressure or bayonet coupling means.

The use of pressure or bayonet coupling systems allows for rapid assembly without the use of specific tools, simplifying and speeding up assembly and disassembly operations.

Advantageously, the kit may comprise plugs and/or feet connected to the ends of said bars.

The addition of plugs and feet improves the stability and aesthetics of the finished product, while also protecting the surfaces on which the furniture element is placed.

Still an object of the invention is a furniture element made from a kit according to one or more of the previous aspects.

This furniture element has all the advantages of a modular kit, offering a finished product that combines functionality, sustainability, and adaptability to the user's needs.

### Brief description of the figures

The present invention will now be described, by way of non-limiting example, according to some of its preferred embodiments, and with the aid of the attached figures, in which:
- Figure 1 illustrates an isometric view of a frame with horizontal, transverse, and vertical bars, according to a particular embodiment of the present invention.
- Figure 2 shows an exploded isometric view of the frame with first and second panels, according to an embodiment.
- Figure 3 illustrates some components of the kit for creating furniture elements, with particular reference to the coupling means, in a particular embodiment according to the present invention.
- Figure 4 illustrates a detail of the kit for creating furniture elements of figure 3.
- Figures 5A and 5B illustrate different mechanical connections between the panels and the coupling means, according to different embodiments of the present invention.
- Figures 6A and 6B illustrate exploded views of a frame assembly, according to the invention.
- Figures 7A-7C show cross-sectional views of different bar profiles, according to the present invention.
- Figures 8A and 8B illustrate detailed views of some end components of the furniture kit, according to the present invention.

### Detailed description

In the various figures, similar parts will be indicated by the same numerical reference.

Herein, it is understood that "coupling" indicates a connection between two components. The coupling can be direct, indirect, physical, or non-physical.

Coupling can be synonymous with one or more of "connection," "linking," "fastening," or the like.

"Insertion", on the other hand, is understood to mean the positioning of a component within or in proximity to another component. The insertion can be partial or complete.

The terms "horizontal" and "vertical" are used to indicate the relative orientation of the components when the furniture element is in its normal position of use, but it should not be interpreted as limiting the absolute orientation of the furniture element.

The term "internal compartment" refers to a space defined within the furniture element, which can be open or closed, and can be used to contain objects or for functional or aesthetic purposes.

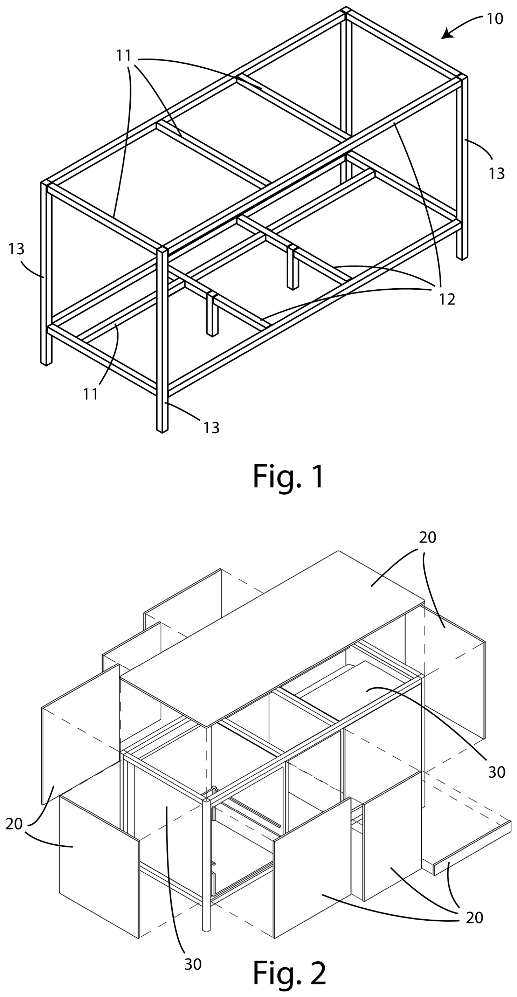

The kit for constructing a modular furniture element comprises several main components, as illustrated in figures 1 and 2.

The kit for constructing a modular furniture element according to the invention is particularly suitable for creating kitchen furniture elements.

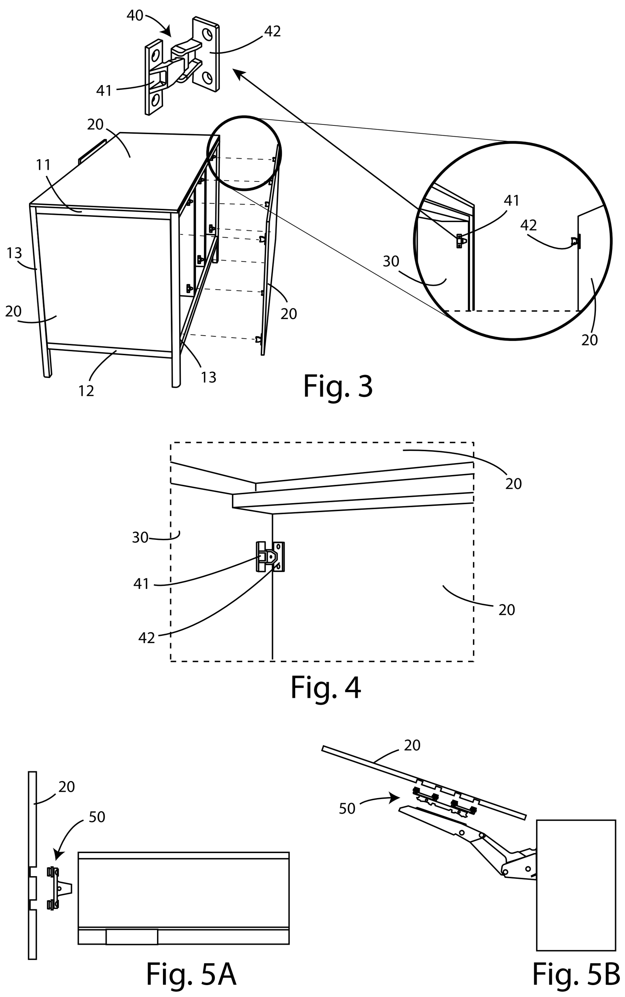

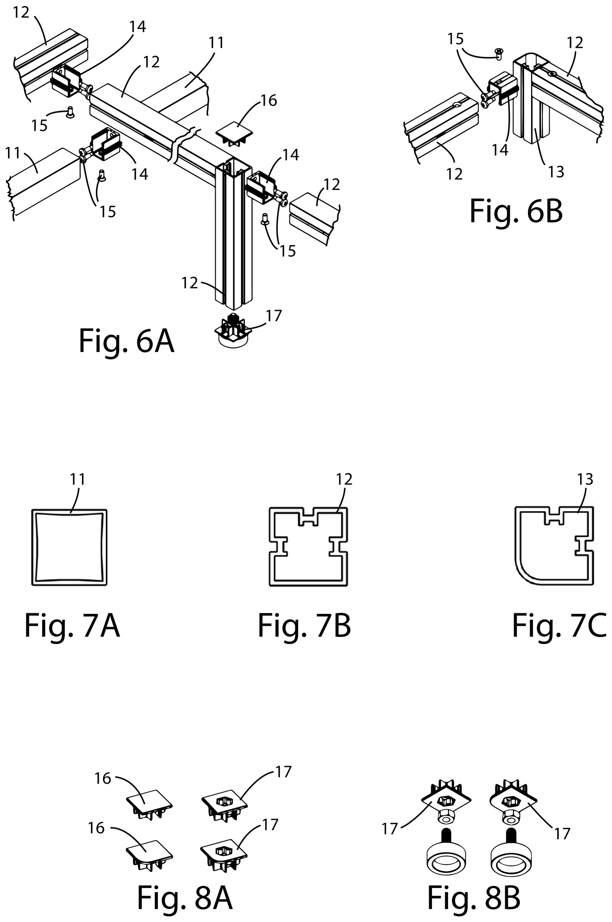

A frame 10 constitutes the supporting structure of the furniture element. As shown in detail in figures 1 and 3, the frame 10 is composed of a plurality of horizontal bars 11, 12 and vertical bars 13, connected to each other by means of concealed joints 14 and mechanical fastening elements 15 (figures 6A and 6B).

This configuration gives the frame 10 robustness and stability, while providing a versatile base for the assembly of the other components.

This aspect also ensures complete modularity of the furniture element and the possibility of creating frames having multiple and different shapes according to needs and requirements.

The kit also comprises a plurality of first panels 20, visible in figures 2, 3, 4, 5A, and 5B.

Advantageously, the first panels 20 are designed for the external lining of the furniture element.

In a preferred embodiment, the first panels 20 are made of a homogeneous material.

In this embodiment, the material may comprise 30% recycled plastic.

This composition not only contributes to the environmental sustainability of the product but also offers excellent mechanical and aesthetic properties.

Advantageously, the first panels 20 are 100% recyclable, further facilitating their reintroduction into the production cycle at the end of the furniture element's useful life.

In a further embodiment, the homogeneous material comprises polyester.

The kit also includes one or more second panels 30, as illustrated in figures 2, 3, and 4. These second panels 30 are designed to be inserted into and mechanically fixed to the frame 10, thus defining the internal compartment of the furniture element.

The second panels 30 contribute to the overall structure of the furniture element, providing stability and internal compartmentalization.

Indeed, the second panels 30 define the compartment or the compartments of the furniture element that can be used for the insertion of appliances or typical kitchen elements, but also as compartments for storing objects, tools, food, etc.

The set of these components (frame 10, first panels 20, and second panels 30) forms a modular and flexible system that allows the construction of customizable furniture elements easily adaptable to different needs and spaces.

With reference to figure 1, the frame 10 forms the supporting structure of the furniture element and can be disassembled and modified by adding various components.

The horizontal bars 11, 12 and the vertical bars 13 are preferably made of aluminum.

In particular, the frame 10 can use three types of extruded aluminum profiles to form the different bars.

As shown in figures 6A and 6B, the horizontal bars 11, 12 and the vertical bars 13 are connected to each other to form the structure of the frame 10.

With reference to these figures, this connection is made by means of concealed joints 14 and fastening means 15.

For example, with reference to the figures, the concealed joint 14 is inserted inside one of the bars 12 of the frame and then fixed, by means of fastening means, to said bar 12 and to at least one further bar 12, 13 that is to be connected to the first bar 12.

Advantageously, the concealed joints 14 are configured to be easily separable, allowing the disassembly of the frame 10 without damaging its components.

To ensure a secure fastening, the system also includes mechanical fastening means 15 which are used in combination with the concealed joints 14. The mechanical fastening means 15 can be, for example, screws or bolts that further secure the connection between the bars of the frame 10.

The combination of concealed joints 14 and mechanical fastening means 15 allows to obtain a robust and stable frame 10, which is at the same time easily disassemble when necessary. This joining and fastening system allows the frame 10 to be assembled and disassembled multiple times without compromising the structural integrity of the components.

Figures 7A, 7B, and 7C illustrate the cross-sections of the different profiles used respectively for the horizontal bars 11, the transverse bars 12, and the vertical bars 13.

Advantageously, each type of bar can have a distinct profile designed to interface with the other components of the frame 10.

Figures 8A and 8B show some details of the end components of the frame 10, which complete the assembly by providing finishes to the ends and stable support to the structure.

In particular, with reference to the figures, feet 17 and plugs 16 are illustrated. The feet 17 are positioned at the ends of the bars in contact with the ground or floor, while the plugs 16 are positioned at the ends of the bars that are visible and not in contact with the ground or floor.

With reference to figures 2 and 3, the furniture element comprises a plurality of first panels 20 for lining and a plurality of second structural panels 30.

The first panels 20 are configured to provide the external lining of the furniture element. These first panels 20 are made of a homogeneous material that may comprise polyester.

In a preferred embodiment, the first panels 20 have a thickness of 12 mm.

The first panels 20 are designed to be mechanically coupled to the second panels 30 by means of mechanical coupling means, such as, for example, with reference to figures 3, 4, 5A, and 5B, the coupling means 40 and 50.

The second panels 30 are structural panels configured to be inserted into and mechanically fixed to the frame 10 to define the internal compartment of the furniture element.

This fixing can be done, for example, with suitable screws.

As shown in figures 3 and 4, the second panels 30 can be coupled to the first panels 20 by means of a mechanical coupling system that comprises a first element 41 and a second element 42.

Appropriately, the first element 41 can be of the "male" type and the second element 42 can be of the "female" type, or vice versa.

The male element can be connected to the second panels 30 while the female element can be connected to the first panels 20, or vice versa.

The material and thickness of the second panels 30 can be chosen based on the structural requirements of the furniture element.

The second panels 30 provide the internal structure and necessary support for the furniture element, while the first panels 20 offer an aesthetic finish and external protection.

The use of panels for the internal structure and external lining, joined by mechanical connections, allows for greater flexibility in the design and customization of the furniture element.

Furthermore, this configuration facilitates any assembly/disassembly, maintenance, or replacement operations of the panels.

With reference to figures 3, 4, 5A, and 5B, the coupling means of the furniture element are illustrated according to the invention.

The system advantageously comprises coupling means 40 that allow a first panel 20 and a second panel 30 to be connected in a secure and reversible manner.

Suitably, the coupling means 40 can be of the pressure or bayonet type, in order to allow a secure but easily reversible connection of the panels.

A mechanical coupling means 50 is also provided for fastening the front panels (figures 5A and 5B).

Advantageously, the mechanical coupling means 50 has a reduced profile with a drilling depth of only 6 mm, allowing the use of thinner panels compared to the traditional standards.

As shown in figures 5A and 5B, the mechanical connector 50 connects to the first panel 20 creating a stable connection.

Figure 5A shows a side view of a first embodiment of the mechanical coupling means 50 assembled on the first panel 20, while figure 5B illustrates a second variant of the mechanical connector 50 that engages with the first panel 20.

This mechanical coupling system allows for easy assembly and disassembly of the panels, while maintaining the structural integrity of the furniture through purely mechanical connections, without the use of adhesives or permanent fastenings.

With reference to figures 8A-8B, the kit for constructing a furniture element comprises end and support components that complete and stabilize the structure.

In particular, the kit comprises plugs 16 that are applied to the ends of the bars 11, 12, 13 of the frame 10. The plugs 16 have the function of closing and finishing the open ends of the bars, giving a better aesthetic appearance to the furniture element and protecting the ends of the bars.

Furthermore, the kit includes feet 17 that are fixed to the base of the frame 10. The feet 17 have the function of supporting and stabilizing the entire structure of the furniture element.

In a particular embodiment, the feet 17 have a specific height that allows access to the area normally covered by a plinth. This feature allows for greater flexibility in the use and cleaning of the space underneath the furniture element.

The plugs 16 and feet 17 can be made of materials compatible with the rest of the structure, such as aluminum or plastic materials.

In some cases, the feet 17 can be adjustable in height to allow for leveling the furniture element on surfaces that are not perfectly flat.

The use of plugs 16 and feet 17 helps to complete the structure of the furniture element, improving its aesthetic appearance as well as its functionality and stability.

With reference to figures 3, 4, 5A, and 5B, the assembly process of the kit for constructing a modular furniture element will now be described.

An operator begins by assembling a frame 10 using horizontal bars 11, 12 and vertical bars 13. The bars are connected to each other by means of concealed joints 14 and mechanical fastening elements 15, creating a robust and modular structure.

End plugs 16 and support feet 17 can be applied to the ends of the bars 11, 12, 13 to complete and stabilize the frame.

Subsequently, the operator inserts and mechanically fixes to the frame 10 one or more second panels 30, which define the internal compartment of the furniture element.

These second panels 30 can be easily removed or repositioned according to needs, ensuring the modularity of the system.

The second panels 30 are arranged according to the furniture element to be obtained, for example, based on the presence of appliances or the intended use of the compartment.

For the external lining, the operator uses a plurality of first panels 20 made of recyclable homogeneous material.

These first panels 20 are coupled to the second panels 30 by means of a mechanical coupling system composed of mechanical coupling means 40 and/or 50.

This assembly system offers numerous advantages:
1. Modularity: the structure of the frame and the use of mechanical connections allow for easy assembly/disassembly as well as easy reconfiguration of the furniture element according to the user's needs.
2. Recyclability: the use of recyclable homogeneous materials for the first panels 20 and the absence of glues and adhesives facilitate the recycling of components at the end of the product's life cycle.
3. Ease of assembly and disassembly: the mechanical connections allow for quick and simple assembly and disassembly, without the need for specialized tools.
4. Component replaceability: in case of damage, individual components can be easily replaced without having to replace the entire furniture element.
5. Transportability: the modular nature of the system allows for easy disassembly for transport and subsequent reassembly at the new location.

This approach to the construction of furniture elements of the kind described promotes the principles of the circular economy, reducing waste and extending the useful life of the product.

The invention thus conceived and illustrated herein is susceptible to numerous modifications and variations, all falling within the scope of the inventive concept.

Furthermore, all details may be replaced by other technically equivalent elements.

Finally, the components used, provided they are compatible with the specific use, as well as the dimensions, may be any according to the requirements and the state of the art.

Where the features and techniques mentioned in any claim are followed by reference signs, such reference signs have been included for the sole purpose of increasing the intelligibility of the claims and, accordingly, such reference signs have no limiting effect on the interpretation of each element identified by way of example by such reference signs.

## Claims

1. A kit for the construction of a modular furniture element with an interior compartment, comprising
- a frame (10) provided with a plurality of horizontal bars (11), transverse bars (12) and/or vertical bars (13);
- a plurality of first panels (20) for lining said inner compartment, made of a composite material in which one of the fractions is a plastic material;
- one or more second panels (30) configured to be mechanically inserted and fixed to said frame (10) for defining said internal compartment;
- mechanical coupling means (40, 50) configured to couple each of said first panels (20) to a respective second panel (30);
**characterized in that**:
- said composite material comprises at least 30% of recycled plastic;
- said horizontal bars (11), cross bars (12) and/or vertical bars (13) are made of aluminium;
- said composite material is completely recyclable.

2. Kit according to claim 1, **characterized in that** said composite material comprises polyester.

3. Kit according to any of the above claims, **characterized in that** said horizontal bars (11), transverse bars (12) and vertical bars (13) are made of aluminum.

4. Kits according to any one of the previous claims, **characterized in that** said horizontal bars (11), cross bars (12) and vertical bars (13) of said frame (10) are connected to each other by means of concealed joints (14) and/or mechanical fastening means (15).

5. Kit according to any one of the preceding claims, **characterized in that** said mechanical coupling means (40, 50) comprise a first male element (41) and a second female element (42).

6. Kit according to claim 6, **characterized in that** said first element (41) is fixed to said one or more second panels (30) and said second element (42) is fixed to a respective first panel (20) or vice versa.

7. Kit according to any one of the preceding claims, **characterized in that** said mechanical coupling means (40, 50) are pressure or bayonet coupling means.

8. Kit according to any one of the preceding claims, **characterized by** comprising plugs (16) and/or feet (17) connected to the ends of said horizontal bars (11), cross bars (12) and vertical bars (13).

9. Furniture element, in particular for kitchens, made from a kit according to one of the previous claims.
